Europäisches Patentamt

European Patent Office

Office européen des brevets

(11) Veröffentlichungsnummer: **0 292 598 B1**

(12) **EUROPÄISCHE PATENTSCHRIFT**

(45) Veröffentlichungstag der Patentschrift: **27.02.91**

(51) Int. Cl.⁵: **G01N 1/24**

(21) Anmeldenummer: **87107822.6**

(22) Anmeldetag: **29.05.87**

(54) Sondenanordnung für die Gasentnahme aus einem Drehrohr-Zementofen.

(43) Veröffentlichungstag der Anmeldung:
30.11.88 Patentblatt 88/48

(45) Bekanntmachung des Hinweises auf die
Patenterteilung:
27.02.91 Patentblatt 91/09

(84) Benannte Vertragsstaaten:
AT BE CH DE ES FR GB IT LI LU NL

(56) Entgegenhaltungen:
AT-B- 313 612
DE-B- 1 533 829
FR-A- 2 363 792
US-A- 3 680 388
US-A- 4 100 806

(73) Patentinhaber: **Siemens Aktiengesellschaft**
**Wittelsbacherplatz 2**
**D-8000 München 2(DE)**

(72) Erfinder: **Loos, Herbert**
**Stintzingstrasse 7**
**D-8520 Erlangen(DE)**

## Beschreibung

Die Erfindung betrifft eine Sondenanordnung für die Gasentnahme aus einem Drehrohr-Zementofen nach dem Oberbegriff des Patentanspruchs 1.

Für den Betrieb von Drehrohr-Zementöfen ist es erforderlich, das während des Brennprozesses im Ofen entstehende Gas fortlaufend zu analysieren. Dazu werden im Beschickungsbereich des Ofens lanzenartige Sonden in das Ofeninnere eingeführt, die eine Öffnung besitzen, durch die das Gas angesaugt und einem Analysengerät zugeführt wird. Dabei herrschen im Sondenbereich Temperaturen von mehr als 1000° C. Daher ist es erforderlich, die Sonden zu kühlen, indem man sie von einem Kühlwasserstrom durchfließen läßt. Das angesaugte Gas enthält in der Regel einen sehr hohen Staubanteil. Dieser ist bei der Analyse hinderlich und muß daher vorher ausgefiltert oder auf andere Weise aus dem Gas entfernt werden.

Aus der DE-OS 33 27 180 ist eine wassergekühlte Sonde zur Gasentnahme aus staubbeladenen Heißgasen bekannt, die in ihrem Inneren ein Gasentnahmerohr mit seitlich herausgeführten Entnahmeöffnungen besitzt. Bei dieser Sonde ist der Mantel im Bereich des Sondenkopfes doppelkegelförmig ausgebildet; die Entnahmeöffnungen sind in dem in Strömungsrichtung sich verjüngenden Teil des Mantels angeordnet sein. Die Massenträgheit der Staubteilchen soll in der Weise ausgenutzt werden, daß diese einer Umlenkung des angesaugten Gases nicht folgen können, sondern gewissermaßen an den Entnahmeöffnungen vorbeifliegen. Es hat sich jedoch gezeigt, daß dies zwar für relativ große Partikel, jedoch nicht für kleine und kleinste Partikel zutrifft. Dieser pulverförmige Staub behindert nach wie vor die Analyse und muß gesondert herausgefiltert werden.

Aus der US-PS 3 680 388 ist ebenfalls eine wassergekühlte Gasentnahmesonde bekannt, die in ihrem Inneren ein Gasentnahmerohr mit seitlich herausgeführten Entnahmeöffnungen besitzt. Bei dieser Sonde geschieht das Ansaugen des Gases unter Überdruck durch einen Heißdampfstrahl, so daß das Analysegas vom Dampfanteil getrennt werden muß, bevor es analysiert wird.

Die AT-PS 313 612 lehrt, ein Keramikfilter im Sondenkopf anzuordnen und mechanisch durch Abkratzen oder Abbürsten zu reinigen.

Trotzdem verstopfen im Sondenbereich angeordnete Filter nach relativ kurzer Zeit. Die Filterpatronen müssen daher von Zeit zu Zeit gereinigt werden, was wegen der ungünstigen Lage der Filter und der hohen Temperaturen umständlich und zeitraubend ist. Wenn man, um dies zu vermeiden, die Filter in den Kühlkreislauf einbeziehen würde, würde das Gas in den Filterporen Materialanbackungen verursachen, was den Filter nach kurzer Zeit unbrauchbar werden ließe.

Der Erfindung liegt die Aufgabe zugrunde, den Filter gut zugänglich anzuordnen und dabei die Filtertemperatur auf einem solchen Betrag konstant zu halten, daß eine Materialanbackung nicht statt findet.

Diese Aufgabe wird erfindungsgemäß durch die im Patentanspruch 1 angegebene Erfindung gelöst. Dadurch ist erreicht, daß die Filterpatrone an einer gut zugänglichen Stelle angeordnet und auf einer solchen Temperatur gehalten wird, daß Materialanbackungen mit Sicherheit vermieden werden.

Zweckmäßige Ausgestaltungen und Weiterbildungen der Erfindung sind in den abhängigen Ansprüchen gekennzeichnet.

Durch die im Patentanspruch 2 angegebene Maßnahme ist erreicht, daß die Außenwand des Gasentnahmerohres in der Sonde nicht unmittelbar mit dem flüssigen Kühlmittel in Verbindung steht, sondern über einen mit einem Isoliermedium ausgefüllten Zwischenraum und ein zweites koaxial dazu angeordnetes Hüllrohr bzw. eine Entnahmekammer. Dadurch ist erreicht, daß sich das Gasentnahmerohr etwa auf die Gastemperatur aufheizen kann, so daß eine Materialanbackung an seiner Innenwand sowie der Entnahmeöffnung vermieden wird.

Durch die Anordnung nach Patentanspruch 3 ist erreicht, daß die Filterpatrone und der diese umgebende Raum bei Erreichen eines einstellbaren Verstopfungsgrades durch Rücklüftung selbsttätig gereinigt wird.

Durch die im Patentanspruch 6 angegebene Ausführungsform des Sondenquerschnittes ist erreicht, daß die Sonde in Richtung des langen Durchmessers eine besonders hohe Steifigkeit und in Richtung des kurzen Durchmessers eine relativ hohe Elastizität aufweist, was bei einer bevorzugten Anordnung der Sonde im Einfüllbereich des Ofens besonders vorteilhaft ist. Herabstürzende Materialanbackungen bis zu einer bestimmten Masse können die Sonde bei einem Auftreffen in Richtung des großen Durchmessers nicht verbiegen, wohl aber zu einem elastischen seitlichen Ausweichen zwingen, was einer Beschädigung der Sonde entgegenwirkt und außerdem bewirkt, daß am Sondenrohr haftende Materialanbackungen abgesprengt werden.

Die Erfindung wird im folgenden anhand eines Ausführungsbeispiels näher erläutert. Es zeigen:

Fig. 1     einen Längsschnitt durch die Sonde in Richtung des großen Durchmessers;

Fig. 2     einen Längsschnitt durch die Sonde in Richtung des kleinen Durchmessers;

Fig. 3     einen Querschnitt durch die Sonde;

Fig. 4     einen Längsschnitt durch den Entstaubungsfilter und

Fig. 5     eine Prinzipdarstellung der gesamten Sondenanordnung.

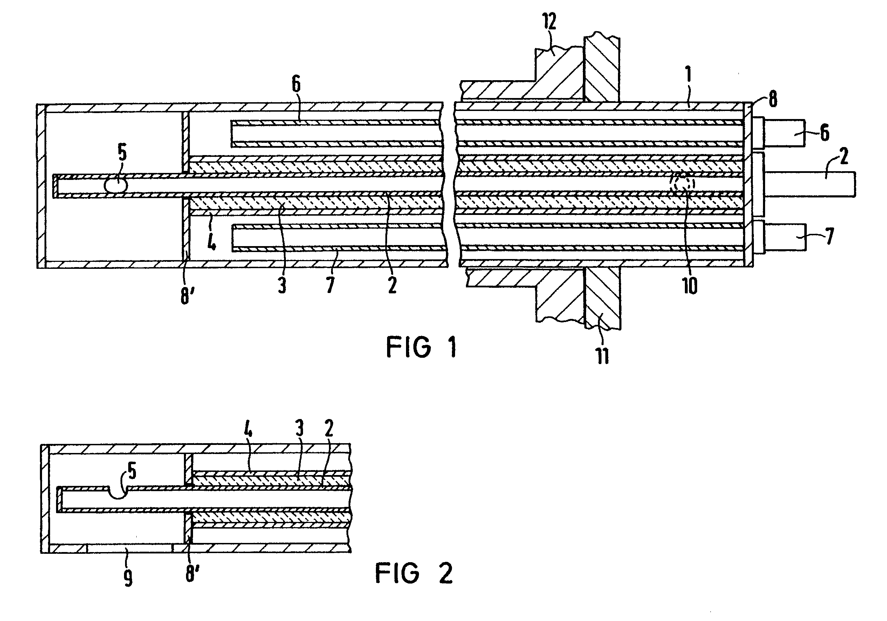

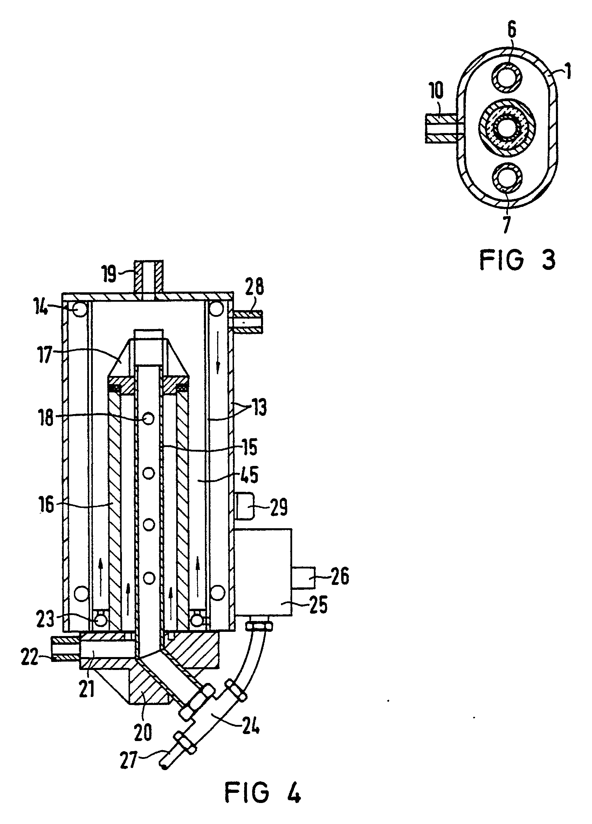

Die in Fig. 1 im Längsschnitt dargestellte lanzenförmige Sonde besteht aus einem Mantelrohr 1 mit ovalem Querschnitt (Fig. 3), welches den inneren Teil der Sonde umschließt, der ein zentral angeordnetes Gasentnahmerohr 2, sowie ein dieses konzentrisch umgebendes Hüllrohr 4 enthält, wobei die Maße beider Rohre so gewählt sind, daß der Innendurchmesser des Hüllrohres 4 um einige Millimeter größer ist als der Außendurchmesser des Gasentnahmerohres 2 und zwischen beiden ein thermisches Isoliermedium 3, beispielsweise ein Keramikkörper, eingefügt ist. Das Mantelrohr 1 ist an seinem oberen Ende durch eine Verschlußplatte 8 flüssigkeitsdicht verschlossen, die mit Durchführungen für den Anschlußstutzen des Gasentnahmerohres 2 sowie von in den Hohlräumen zwischen dem Hüllrohr 4 und dem Mantelrohr 1 angeordneten Kühlmittel-Rücklaufrohren 6, 7 versehen ist. Der innere Teil der Sonde ist durch eine weitere Verschlußplatte 8' in eine obere und eine untere Kammer unterteilt. Dabei ist die obere Kammer als Kühlkammer und die untere Kammer als Entnahmekammer ausgebildet. Die in der Kühlkammer angeordneten Kühlmittel-Rücklaufrohre 6, 7 enden oberhalb der Verschlußplatte 8'. Das Hüllrohr 4 ist mit dieser Verschlußplatte flüssigkeitsdicht verbunden, während das Gasentnahmerohr 2 durch diese Verschlußplatte hindurch nach unten in die Entnahmekammer geführt ist. Der in die Entnahmekammer hineinragende Teil des Gasentnahmerohres 2 ist mit einer seitlichen Entnahmeöffnung 5 versehen. Die Entnahmekammer besitzt an der der Entnahmeöffnung 5 gegenüberliegenden Seite eine Eintrittsöffnung 9. Eine in der Kühlkammer der Sonde stirnseitig angeordnete Bohrung mit einem Anschlußstutzen 10 dient dem Kühlmittelzulauf. Der Kühlmittelrücklauf geschieht über die Rücklaufrohre 6, 7. Das Mantelrohr 1 ist an seinem oberen Teil mit einem Befestigungsflansch 11 versehen, der dazu dient, die Sonde nach deren Einführung durch eine entsprechende Bohrung im Beschicktungsteil des Ofens an dessen Flanschteil 12 mit nicht darge stellten Mitteln zu befestigen. Die Lage des Befestigungsringes 11 an der Sonde ist so gewählt, daß die Anschlußstutzen für den Kühlmittelzulauf, dem Kühlmittelrücklauf und die Gasentnahme außen zugänglich sind.

Wie in Fig. 2 dargestellt, ist die Eintrittsöffnung 9 der Entnahmekammer des Mantelrohres 1 der Entnahmeöffnung 5 des Gasentnahmerohres 2 gegenüberliegend angeordnet. Dadurch wird die gesamte Entnahmekammer vom einströmenden Gas durchspült, so daß sie sich etwa auf die Gastemperatur erhitzen kann. Dadurch können sich in der Entnahmekammer keine Materialanbackungen bilden. Durch die seitliche Anordnung der Eintrittsöffnung 9 ist erreicht, daß die groberen Staubteile nicht in die Öffnung hineingelangen, sondern außen vorbeifliegen. Wegen der thermischen Isolierung des Gasentnahmerohres 2 durch das Isoliermedium 3 kann sich auch das Gasentnahmerohr etwa auf die Temperatur des durchströmenden Gases erhitzen, was ebenfalls dazu beiträgt, Materialanbackungen zu verhindern.

Wie die Querschnittsdarstellung in Fig. 3 zeigt, ist das Mantelrohr 1 oval geformt, wodurch nicht nur günstigere räumliche Verhältnisse entstehen, die der Anordnung der Rücklaufrohre 6, 7 zugute kommen, sondern auch der mechanischen Festigkeit der Sonde. Im Bereich des großen Durchmessers weist das Mantelrohr 1 eine wesentlich grössere Steifigkeit auf als in Richtung des kleinen Durchmessers. Dies ist vor allem dann von Vorteil, wenn die Sonde, wie allgemein üblich, im Einfüllbereich des Ofens verwendet wird. Wenn dabei die Sonde mit ihrem großen Durchmesser in Fallrichtung des Materials angeordnet ist, können auch größere herabfallende Anbackungsbrocken die Sonde nicht verbiegen, insbesondere deshalb nicht, weil die Sonde in Richtung des kleinen Durchmessers elastisch ausweichen kann. Dieses hat im übrigen zur Folge, daß Anbackungen am Mantelrohr der Sonde gelöst werden.

In Fig. 4 ist das zugehörige Entstaubungsfilter ebenfalls in einem Längsschnitt dargestellt. Es besteht aus einem doppelwandigen zylinderförmigen Gehäuse 13. Zwischen den beiden Wänden ist ein schraubenförmig gewickelter elektrischer Heizwendel 14 angeordnet. Im inneren des bis auf einige noch zu beschreibende Anschlußstutzen allseitig gasdicht geschlossenen Gehäuses befindet sich ein Zentralrohr 15, das der Gasentnahme und gleichzeitig als Halterung für eine zylinderförmig Filterpatrone 16 dient, welche das Zentralrohr 15 umgibt. Das Zentralrohr 15 überragt die Filterpatrone 16 derart, daß sein oberes Ende mit einem Gewinde versehen werden kann, auf dem ein Schraubverschluß 17 zum Befestigen der Filterpatrone 16 angeordnet werden kann. Das Zentralrohr 15 ist, wie bereits erwähnt, gleichzeitig für die Gasentnahme vorgesehen und besitzt dazu über die gesamte Länge der Filterpatrone 16 gleichmäßig verteilt Bohrungen 18. Das Rohr ist unten aus dem Gehäuse herausgeführt und mit einem Anschlußstutzen versehen. Ein Anschlußstutzen 19 für die Gaszufuhr ist im Deckel des Gehäuses angeordnet. Der Boden des Gehäuses ist mit einer Bodenplatte 20 verschlossen, welche eine Bohrung 21 mit einem Anschlußstutzen 22 für die Preßluftzufuhr besitzt. Dieser steht in Verbindung mit dem Raum zwischen dem Zentralrohr 15 und der Innenwand der Filterpatrone 16. Auf der Bodenplatte 20 liegt eine an der inneren Gehäusewand befestigte Ringdüse 23, deren Düsenöffnungen in den Filterraum 45 zwischen der Gehäuseinnenwand und der Außenwand der Filterpatrone 16 gerichtet sind. Der Anschlußflansch des Zentralrohres 15 ist mit einem T-Stück 24 versehen, welches auf der einen Seite über ein an der Gehäuseaußenwand befestigtes Gas-Absperrventil 25 mit dem Gasanschlußstutzen 26 für das nicht dargestellte Analysengerät und auf der anderen Seite mit einem Preßluft-Anschlußstutzen 27 für eine Preßluftzufuhr von Fall zu Fall zur Reinigung des Zentralrohres 15 versehen ist. Ein weiterer Preßluftanschluß 28 ist in Deckelnähe radial nach außen geführt und mündet in den für die Unterbringung der Heizwendel 14 vorgesehenen Behälterzwischenraum, dessen Temperatur von einem Thermostaten 29 auf einem solchen Wert konstant gehalten wird, daß sich keine Materialanbackung im Filterinnenraum bilden kann.

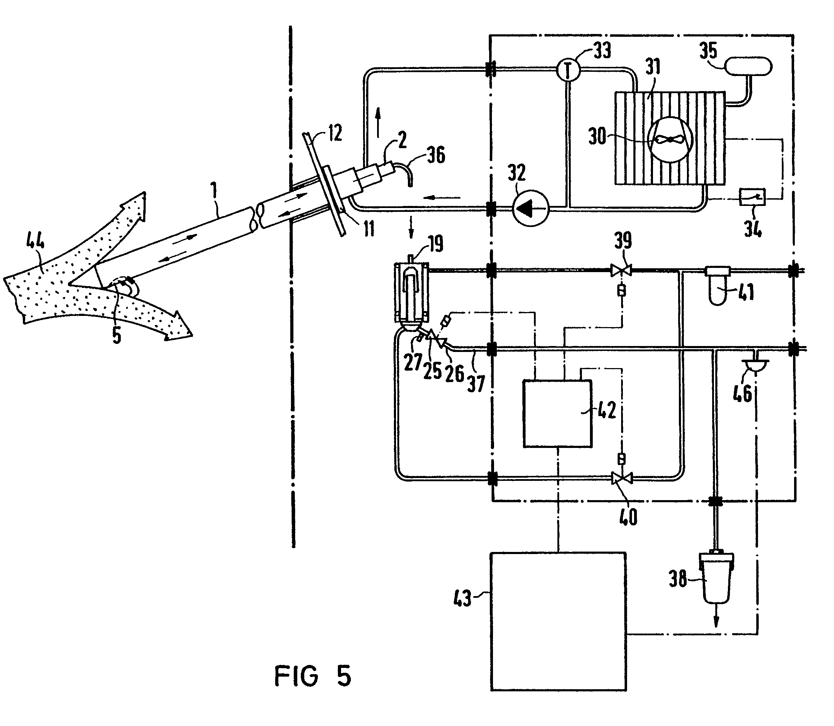

Anhand des in Fig. 5 dargestellten Übersichtsschemas der Anordnung soll deren Funktion näher beschrieben werden. Die Sonde 1 bis 10 ragt in jenen Bereich des nicht näher dargestellten Ofens hinein, der keine festen Bestandteile enthält. Die Sonde wird auf bereits beschriebene Weise von der Kühlflüssigkeit durchströmt, welche in einem geschlossenen Kühlsystem mit einem vom Lüfter 30 kühlluftdurchströmten Radiator 31, einer Umwälzpumpe 32, einem Thermoregelventil 33, einem Thermoschalter 34 für die Betätigung des Lüfters 30 bei Erreichen einer bestimmten oberen Temperaturgrenze sowie einem Ausdehnungsgefäß 35 zirkuliert. Bei diesem an sich bekannten Kühlsystem treibt die Umwälzpumpe 32 die nach Durchlauf durch den Radiator 31 gekühlte Flüssigkeit in einem geschlossenen Kreislauf durch die Sonde 1 bis 10 und zurück in den oberen Bereich des Radiators 31. Dabei öffnet und schließt das Thermoregelventil 33 selbsttätig bei Unterschreiten einer Minimaltemperatur einen Parallelkreis zum Radiator 31. Dadurch ist erreicht, daß in der Sonde eine bestimmte Temperatur aufrechterhalten bleibt, die ausreicht, um diese Sonde vor thermischer Beschädigung zu schützen, jedoch nicht so niedrig wird, daß sich Materialanbackungen in ihr bilden können. Das Gasentnahmerohr 2 der Sonde steht über eine Rohrleitung 36 in Verbindung mit dem Gasanschlußstutzen 19 des in Fig. 4 bereits beschriebenen Entstaubungsfilters. Dieser ist über eine am Gasanschlußstutzen 26 angeflanschte Gasleitung 37 mit einem nicht dargestellten Analysengerät verbunden. Diese ist an ihrer tiefsten Stelle mit einem Kondensatabscheider 38 für das Auffangen flüssiger Kondensate ausgestattet. Außerdem ist der Entstaubungsfilter über einen seiner Preßluftanschlußstutzen 22, 28 und, wahlweise, 27 über elektrisch steuerbare Preßluft-Magnetventile 39, 40 und ein Luftfilter 41 mit einem nicht dargestellten Preßluftgerät verbunden. Das Gas-Absperrventil 25, die beiden Preßluft-Magnetventile 39, 40 sowie die Heizwendel 14 sind über ein Anschlußelement 42 mit einer elektrischen Steuerungsanordnung 43 verbunden.

Die Anordnung funktioniert in der Weise, daß das Analysengerät über die Entnahmeleitung 37 und das geöffnete Gas-Absperrventil 25, durch das Zentralrohr 15, die Filterpatrone 16, die Gasleitung 36 und das Gasentnahmerohr 2 durch die Eintrittsöffnung 9 und die Entnahmeöffnung 5 der Sonde aus dem Staub-Gas-Gemischstrom 44 des Ofens Gas ansaugt. Dabei findet die erste Staubseparation größerer Teilchen bereits an der Einströmöffnung 9 statt, die ja durch ihre Stellung zum Gasstrom strömungstechnische Verhältnisse schafft, die so wirken, daß die größeren Staubteilchen an der Öffnung vorbeifliegen. Der verbleibende Staubrest sammelt sich im Filterraum 45 und in der Filterpatrone 16. Da diese sich zunehmend füllen, entsteht an der mit der Gasentnahmeleitung 37 verbundenen Druckmeßdose 46 ein steigender Unterdruck. Bei Unterschreiten eines Grenzwertes gibt diese ein Signal an die Steuereinrichtung 43 ab, welche das Gas-Absperrventil 25 schließt und das Preßluft-Magnetventil 40 öffnet. Dadurch wird Preßluft in den Raum zwischen dem Zentralrohr 15 und der Innenwand der Filterpatrone 16 geführt, die das Filter von innen nach außen durchbläst, so daß sich der im Filter haftende Staub in dem Raum zwischen dem Außenmantel der Filterpatrone 16 und der Innenwand des Entstaubungsfilters ansammelt. Nach einer wählbaren Zeitdauer wird zusätzlich zum Preßluft-Magnetventil 40 das Preßluft-Magnetventil 39 geöffnet. Dabei gelangt von den Heizwendeln 14 erwärmte Preßluft in die Ringdüse 23 und diese bläst den aus der Filterpatrone 16 gesammelten Staub über die Rohrleitungen 36 und das Gasentnahmerohr 2 sowie die Öffnungen 5 und 9 der Sonde in den Ofen zurück. Nach einer weiteren einstellbaren Zeit werden beide Preßluftmagnetventile 39, 40 geschlossen und das Gas-Absperrventil 25 geöffnet, so daß erneut Gas an das Analysengerät gelangt und die Analyse weitergeführt werden kann. Dieser Vorgang wiederholt sich in den von der Druckmeßdose 46 bestimmten Intervallen, oder durch ein in der Steuerungsanordnung 43 integriertes einstellbares Zeitrelais.

## Ansprüche

1.    Sondenanordnung für die Gasentnahme aus einem Drehrohr-Zementofen, mit einer in den Ofen lanzenartig hineinragenden Gasentnahmesonde mit einem in einem Mantelrohr verlaufenden Gasentnahmerohr, wobei das Gasentnahmerohr eine seitlich nach außen geführte Öffnung besitzt, sowie mit in der Gasentnahmesonde parallel zum Gasentnahmerohr geführten Rohren für die Rückführung eines die Sonde von der Stirnseite her durchströmenden flüssigen Kühlmittels, die Bestandteil eines Kühlsystems sind, sowie mit einem Entstaubungsfilter, **dadurch gekennzeichnet,** daß der Entstaubungsfilter (13 bis 29) räumlich getrennt von der Sonde (1 bis 10) angeordnet ist und aus einer aufheizbaren Kammer besteht, in die eine hohlzylinderförmige Filterpatrone (16) einsetzbar ist, das der die Filterpatrone außen umgebende Filterraum (45) über eine Rohrleitung (36) mit dem Gasentnahmerohr (2) der Sonde (1 bis 10) und daß der Innenraum der Filterpatrone (16) über ein Zentralrohr (15) und ein beheiztes, elektrisch steuerbares Gas-Absperrventil (25) mit einer Gasanalysenanordnung verbunden ist.

2. Sondenanordnung nach Anspruch 1, **dadurch gekennzeichnet,** daß das Mantelrohr (1) der Sonde (1 bis 10) durch eine flüssigkeitsdichte Verschlußplatte (8') in eine obere und eine untere Kammer unterteilt und die obere Kammer als Kühlkammer und die untere Kammer als Entnahmekammer ausgebildet ist, wobei die Rohre (6,7) oberhalb der Verschlußplatte (8') enden, und die Kühlkammer bis auf Öffnungen für die Gasentnahme und den Kühlflüssigkeitskreislauf und die Entnahmekammer bis auf eine Eintrittsöffnung (9) für das Gas allseitig geschlossen sind und daß das Gasentnahmerohr (2) innerhalb der Kühlkammer von einem dieses koaxial umgebenden, allseitig geschlossenen Hüllrohr (4) solchen Durchmessers derart umgeben ist, daß zwischen beiden Rohren ein der thermischen Isolierung dienender und von einem thermischen Isoliermedium ausgefüllter Zwischenraum (3) vorhanden ist, und daß das Gasentnahmerohr (2) durch die Verschlußplatte (8') in die Entnahmekammer hineinragt und die seitlich nach außen geführte Öffnung (5) an der der Eintrittsöffnung (9) gegenüberliegenden Seite liegt.

3. Sondenanordnung nach Anspruch 1 oder 2, **dadurch gekennzeichnet,** daß der Entstaubungsfilter (13 bis 29) aus einem zylinderförmigen Gehäuse (13) besteht, in das eine zylinderförmigen Filterpatrone (16) mit Hilfe eines Schraubverschlusses (17) auswechselbar einsetzbar ist und ein sich über die Filterlänge erstreckendes, mit axial versetzten Bohrungen versehenes Zentralrohr (15) in den von der Innenwand der Filterpatrone umschlossenen Innenraum hineinragt, welches einerseits mit dem Gas-Absperrventil (25) und andererseits mit einem Preßluftanschlußstutzen (27) verbunden ist und der Innenraum über einen in einer Bodenplatte (20) eingelassenen weiteren Preßluftanschlußstutzen (22) zum Einblasen von Preßluft in Verbindung steht, der seinerseits über ein erstes Magnetventil (40) mit Preßluft verbunden ist, und der die Filterpatrone (16) außen umgebende Raum (45) kopfseitig mit einem Anschlußstutzen (19) für die Zufuhr des von der Sonde (1 bis 10) kommenden Gases und fußseitig mit einer Ringdüse (23) zum Einblasen von Preßluft versehen ist und das Gehäuse (13) doppelwandig ausgeführt und der dadurch entstehende Ringraum als Heizraum ausgebildet ist, der eine thermostatisch geregelte elektrische Heizwendel (14) enthält, und der kopfseitig mit einem Preßluftanschluß (28) für die Zufuhr von Preßluft über ein zweites Magnetventil (39) und fußseitig mit Bohrungen für die Zufuhr von Preßluft zur Ringdüse (23) versehen ist.

4. Sondenanordnung nach Anspruch 3, **dadurch gekennzeichnet,** daß eine elektrische Steuerungsanordnung (43) vorhanden ist, welche die Magnetven tile (39, 40) und das Gas-Absperrventil (25) in der Weise betätigt, daß bei zunächst geschlossenen Preßluft-Magnetventilen (39, 40) das Gas-Absperrventil (25) solange geöffnet bleibt, bis von einer in der Gasleitung (37) zum Analysengerät angeordneten Druckmeßdose (46) ein bestimmter einstellbarer Unterdruck ermittelt wird, nach dessen Unterschreiten das Gas-Absperrventil (25) geschlossen, das erste Preßluft-Magnetventil (40) für eine wählbare Zeitdauer geöffnet und nach einer weiteren wählbaren Zeitdauer zusätzlich das zweite Preßluft-Magnetventil (39) geöffnet und nach dem Schließen beider das Gas-Absperrventil (25) wieder geöffnet wird.

5. Sondenanordnung nach einem der vorhergehenden Ansprüche, **dadurch gekennzeichnet,** daß das Kühlsystem für die Sonde (1 bis 10) als geschlossenes, von einem Thermoregelventil (33) in Verbindung mit einem Luftkühler (30, 31) geregeltes System ausgebildet ist.

6. Sondenanordnung nach einem der vorhergehenden Ansprüche, **dadurch gekennzeichnet,** daß die Sonde (1 bis 10) einen ovalen Querschnitt aufweist.

## Claims

1. A probe arrangement for the removal of gas from a rotating pipe cement oven, with a gas removal probe projecting into the oven in a lance-like manner with a gas removal tube extending in a casing, wherein the gas removal tube has an opening directed laterally outwards, as well as with tubes in the gas removal probe directed parallel to the gas removal tube, for the recycling of a cooling agent flowing through the probe from the front, which tubes are a component part of a cooling system, as well as with a dust filter, characterised in that the dust filter (13 to 29) is arranged spatially separated from the probe (1 to 10) and consists of a heatable chamber, into which a hollow cylindrical shaped filter cartridge (16) is able to be inserted, in that the filter chamber (45) surrounding the outside of the filter cartridge is connected by way of a pipe line (36) to the gas removal tube (2) of the probe (1 to 10) and in that the inner chamber of the filter cartridge (16) is connected by way of a central tube (15) and a heated, electrically controllable gas shut-off valve (25) to a gas analysis arrangement.

2.  A probe arrangement according to claim 1, characterised in that the casing (1) of the probe (1 to 10) is divided by a liquid-tight sealing plate (8') into an upper and a lower chamber, and the upper chamber is constructed as a cooling chamber and the lower chamber as a removal chamber, wherein the tubes (6,7) terminate above the sealing plate (8'), and the cooling chamber is closed on all sides, except the openings for the gas removal and the cooling liquid circuit, and the removal chamber is closed on all sides except for an inlet opening (9) for the gas, and in that the gas removal tube (2) within the cooling chamber is surrounded by an encasing tube (4), closed on all sides, and surrounding said tube (2) coaxially, which encasing tube (4) is of such a diameter that between both tubes an intermediate chamber (3) is present serving for thermal insulation and filled by a thermal insulating agent, and in that the gas removal tube (2) projects through the sealing plate (8') into the removal chamber and the opening (5) directed laterally outwards lies on the side that lies opposite to the inlet opening (9).

3.  A probe arrangement according to claim 1 or 2, characterised in that the dust filter (13 to 29) consists of a cylindrical housing (13), into which the hollow cylindrical filter cartridge (16) is able to be inserted exchangeably with the aid of a screw cap (17), in that the central tube (15) extends over the filter length, and is provided with axially displaced bores (18), and projects into the inner chamber surrounded by the inner wall of the filter cartridge (16), in that the central tube (15) is connected, on the one hand, on its lower projecting end to the gas shut-off valve (25) and, on the other hand, is connected to a compressed air connecting piece (27), and the inner chamber is connected via a further compressed air connecting piece (22), inserted into a base plate (20), for blowing-in compressed air, which piece is connected, for its part, by way of a first magnetic valve (40) to compressed air, in that the chamber (45) surrounding the outside of the filter cartridge (16) is provided on the head side with a connecting piece (19) for the supply of the gas coming from the probe (1 to 10) via the pipe line (36), and on tile took side to a ring nozzle (23) for blowing-in compressed air, in that the housing (13) is designed to be double-walled and the annular chamber, resulting through this, is constructed as a heating chamber, which contains a thermostatically regulated electric heater coil (14) and which, on the head side on the outer wall is provided with a compressed air connection (28) for the supply of compressed air to the annular chamber by way of a second magnetic valve (39) and on the foot side on the inner wall with bores for the supply of compressed air to the ring nozzle (23).

4.  A probe arrangement according to claim 3, characterised in that an electric control arrangement (43) is present, which activates the magnetic valves (39,40) and the gas shut-off valve (25) in such a manner that with the compressed air magnetic valves (39,40) closed first the gas shut-off valve (25) remains open until a certain adjustable low pressure is determined by a pressure sensor (46), arranged in the gas line (37) to the analysis apparatus, the gas shut-off valve (25) being closed if this low pressure is fallen short of, the first compressed air magnetic valve (40) opened for a selectable time duration and after a further selectable time duration the second compressed air magnetic valve (39) is opened and, after closing both, the gas shut-off valve (25) is again opened.

5.  A probe arrangement according to one of the preceding claims, characterised in that the cooling system for the probe (1 to 10) is constructed as a closed system regulated by a thermo-regulating valve (33) in connection with an air cooler (30,31).

6.  A probe arrangement according to one of the preceding claims, characterised in that the probe (1 to 10) has an oval cross-section.

## Revendications

1. Dispositif à sonde de prélèvement de gaz d'
   un four à ciment rotatif, comprenant une sonde
   de prélèvement des gaz pénétrant à la manière d'une lance dans le four et ayant un tube de
   prélèvement des gaz s'étendant dans une enveloppe tubulaire, le tube de prélèvement des
   gaz possédant un orifice latéral menant à l'extérieur, ainsi que des tubes passant dans la
   sonde de prélèvement de gaz parallèlement au
   tube de prélèvement de gaz et destinés au
   recyclage d'un agent de refroidissement liquide passant dans la sonde par le côté frontal et
   qui font partie d'un système de refroidissement, ainsi qu'un filtre de dépoussiérage, caractérisé en ce que le filtre de dépoussiérage
   (13 à 29) est monté de manière séparée dans
   l'espace de la sonde (1 à 10) et est constitué
   d'une chambre qui peut être chauffée et dans
   laquelle peut être montée une cartouche de
   filtre (16) en forme de cylindre creux, en ce
   que la chambre de filtration (45) entourant à
   l'extérieur la cartouche de filtre communique
   par un conduit (36) avec le tube de prélèvement de gaz (2) de la sonde (1 à 10) et en ce
   que l'intérieur de la cartouche de filtre (16)
   communique par un tube central (15) et par
   une vanne d'arrêt de gaz (25), chauffée et
   pouvant être commandée électriquement, avec
   un dispositif d'analyse des gaz.

2. Dispositif à sonde suivant la revendication 1,
   caractérisé en ce que l'enveloppe tubulaire (1)
   de la sonde (1 à 10) est subdivisée par une
   plaque de fermeture (8') étanche aux liquides
   en une chambre supérieure et en une chambre
   inférieure et la chambre supérieure est constituée en chambre de refroidissement et la
   chambre inférieure en chambre de prélèvement, des tubes (6 et 7) se terminant audessus
   de la plaque de fermeture (8') et la chambre
   de refroidissement étant fermée de tous côtés
   à l'exception d'orifices pour le prélèvement de
   gaz et pour le circuit du liquide de refroidissement et la chambre de prélèvement étant fermée de tous côtés à l'exception d'un orifice
   d'entrée (9) pour le gaz et en ce que le tube
   de prélèvement des gaz (2) est entouré dans
   la chambre de refroidissement d'un tube de
   gainage (4), l'entourant coaxialement et fermé
   de tous côtés, d'un diamètre tel qu'il est prévu
   entre les deux tubes un intervalle (3) servant
   d'isolation thermique et empli d'un milieu thermiquement isolant et en ce que le tube de prélèvement des gaz (2) pénètre en passant
par la plaque de fermeture (8') dans la chambre de prélèvement et l'orifice (5) menant latéralement à l'extérieur se trouve du côté qui est
opposé à l'orifice d'entrée (9).

3. Dispositif à sonde suivant la revendication 1 ou
   2, caractérisé en ce que le filtre de dépoussiérage (13 à 29) est constitué d'un corps (13) en
   forme de cylindre, dans lequel peut être montée, avec possibilité de remplacement et à
   l'aide d'une fermeture par vissage (17), la cartouche de filtre (16) en forme de cylindre
   creux, en ce que le tube central (15) s'étend
   sur la longueur du filtre, est muni de perçages
   (18) décalés axialement et pénètre dans l'espace intérieur entouré de la paroi intérieure de
   la cartouche de filtre (16), en ce que le tube
   central (15) communique, d'une part, à son
   extrémité inférieure en saillie, avec la vanne
   d'arrêt des gaz (25), et d'autre part, avec une
   tubulure de raccordement pour l'air comprimé
   (27) et la chambre intérieure communique par
   une autre tubulure de raccordement (22) pour
   l'air comprimé, ménagée dans la plaque de
   fond (20), destinée à l'insufflation d'air comprimé et alimentée de son côté en air comprimé
   par une première électrovanne (40), en ce que
   la cartouche de filtre (16) est munie dans la
   chambre (45) l'entourant à l'extérieur, du côté
   de la tête, d'une tubulure de raccordement (19)
   pour amener le gaz venant de la sonde (1 à
   10) en passant par le conduit (36) et, du côté
   du pied, d'une buse annulaire (23) d'insufflation d'air comprimé, en ce que le corps (13)
   est à double paroi et l'espace annulaire ainsi
   créé est constitué en chambre de chauffage
   qui contient un serpentin électrique (14) de
   chauffage à réglage thermostatique et qui est
   munie, du côté de la tête, sur la paroi extérieure d'une tubulure pour l'air comprimé (28) destinée à amener de l'air comprimé à la chambre
   annulaire par l'intermédiaire d'une seconde
   électrovanne (29) et, du côté du pied, sur la
   paroi intérieure de perçages pour l'amenée
   d'air comprimé à la buse annulaire (23).

4. Dispositif à sonde suivant la revendication 3,
   caractérisé en ce qu'il est prévu un dispositif
   électrique de commande (43), qui manoeuvre
   les électrovannes (39,40) et la vanne d'arrêt
   des gaz (25) de sorte que, lorsque les électrovannes (39,40) pour l'air comprimé sont tout
   d'abord fermées, la vanne d'arrêt des gaz (25)
   reste ouverte jusqu'à ce que soit déterminée
   une certaine dépression réglable par une boîte
   dynamométrique (46) montée dans le conduit
   pour les gaz (37) allant à l'appareil d'analyse, la vanne d'arrêt des gaz (25) étant fermée lorsque la pression devient inférieure à cette dépression déterminée, la première électrovanne (40) pour l'air comprimé étant ouverte pour une durée que l'on peut choisir et, après une autre durée que l'on peut choisir, la seconde électrovanne (39) pour l'air comprimé étant en outre ouverte et, après la fermeture des deux, la vanne d'arrêt des gaz (25) étant ouverte à nouveau.

5. Dispositif à sonde selon l'une des revendications précédentes, caractérisé en ce que le système de re froidissement pour la sonde (1 à 10) est constitué d'un système fermé réglé par une vanne de thermorégulation (33) en liaison avec un dispositif de refroidissement de l'air (30,31).

6. Dispositif à sonde selon l'une des revendications précédentes, caractérisé en ce que la sonde (1 à 10) présente une section transversale ovale.

FIG 1

FIG 2

FIG 3

FIG 4

FIG 5

EP 0 292 598 B1